# EUROPEAN PATENT APPLICATION

(11) **EP 3 998 465 A1**
(43) Date of publication of application: **18.05.2022**
(21) Application number: 20837472.8
(22) Date of filing: 19.05.2020
(51) Int. Cl.: G01L 9/00, G01L 19/00, G01L 19/06, G01L 19/14

(54) **FLIP CHIP-BASED PRESSURE SENSOR CORE, CORE MANUFACTURING AND PACKAGING METHOD, AND PRESSURE SENSOR**

(30) Priority: 08.07.2019 CN 201910608670
(71) Applicant: Xinligan Senassets (Nanjing) Co., Ltd., Nanjing, Jiangsu 210019 (CN)
(72) Inventor: LOU, Shuai, Nanjing, Jiangsu 210019 (CN); FEI, Youjian, Nanjing, Jiangsu 210019 (CN); LIU, Zhaoli, Nanjing, Jiangsu 210019 (CN)
(74) Representative: Cabinet Chaillot
(86) International application number: PCT/CN2020/091090
(87) International publication number: WO 2021/004165

(57) **Abstract**

The present invention provides a flip chip-based pressure sensor core, a method manufacturing and packaging the core and a pressure sensor. The core comprises: a rigid housing (4) having a through hole therein; a terminal (6) having one end flip-chip soldered to a MEMS pressure-sensitive chip (1) by means of a solder (2) and another end passing through the through hole in the rigid housing (4) so as to connect to a circuit board of a sensor to achieve signal processing; an isolation medium (5) filled in the through hole of the rigid housing (4) and used to sealingly fasten and connect a portion of the terminal (6) in the through hole to an inner wall of the through hole; and an epoxy filler (3) filled between and around the MEMS pressure-sensitive chip (1), the terminal (6), and the solidified isolation medium (5) so as to protect the solder joints. During operation, a pressure of a medium under test acts on the MEMS pressure-sensitive chip (1), and signal changes caused by the pressure are output by means of the terminal (6).

## Description

### FIELD OF THE INVENTION

The present invention relates to the technical field of manufacturing pressure sensors, in particular to a flip chip-based pressure sensor core and a manufacturing method thereof.

### BACKGROUND OF THE INVENTION

A pressure sensor is usually composed of a pressure sensing element and a signal-processing unit, having its principle such as responding to pressure signals by means of the pressure sensing element, and converting the pressure signals into available electrical signal outputs according to a certain transfer function, which then are processed into the required analog output or digital output by the signal-processing unit. The sensors are used in more complex environments including water, oil, various liquids, gases, refrigerants and other complex medium environments.

Pressure sensing elements commonly used in the pressure sensor include the following technical means: a ceramic capacitor, a ceramic resistor, glass micro-fused gage, a sputtering film and a micro-electromechanical system (MEMS). The ceramic capacitor/ceramic resistor has a capability only to be sealed with an O-ring seal, but not to be compatible with various pressure media, and a long-term risk of failure and leakage under some media (such as refrigerants), and requires a large packaging volume. The glass micro-fused gage requires a sensor chip to be sintered with glass on a film, resulting in a complex process and a large equipment investment. The sputtering film requires a pressure-sensitive module to be sputtered on a base, resulting in a large equipment investment and high costs, without wide use.

The MEMS pressure sensor based on a microelectromechanical system can achieve high-precision and low-cost mass production by a technical means similar to an integrated circuit, however, the packaging technique and process required by the MEMS pressure sensor severely limit its application fields. At present, common processes based on MEMS pressure sensors include attaching a chip by a backside adhesive, eutectic soldering and filling oil. The process of attaching a chip by a backside adhesive is applied by sticking the pressure chip with an adhesive, and then achieving an electrical connection by means of gold or aluminum wires, but it cannot be used for pressure measurement in complex media, and the chip has the risk of falling off the adhesive under pressure, and cannot withstand large pressure. The process of eutectic soldering is applied by sealing the pressure chip on a metal tube in way of eutectic soldering, and then achieving an electrical connection by means of gold or aluminum wires, has high material costs (chip/solder/kovar body, etc.), and complex process including eutectic soldering, laser welding, resistance soldering, etc.

The process of filling oil is applied by encapsulating the MEMS pressure-sensitive chip in a sealed structure filled with silicone oil, and transmitting applied pressure from a stainless steel film to the pressure-sensitive chip through the silicone oil, and has the capability for an oil-filled core to be well isolated from the medium, but a complex process, very high product costs, and a large volume.

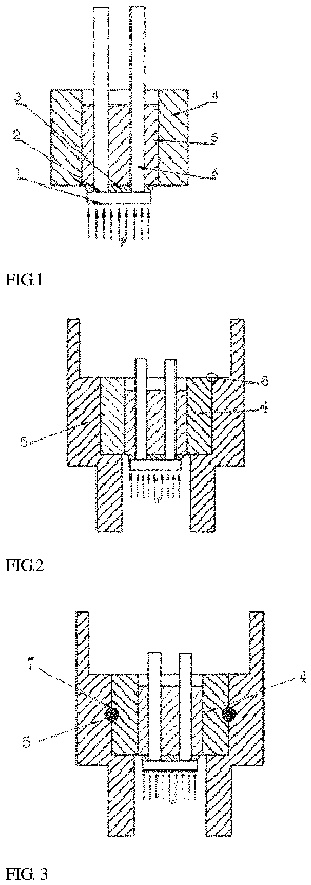

Flip-chip soldering is an advanced packaging technique that is applied by directly interconnecting a chip to a substrate. In the packaging process, the jointing point on the chip positioned facedown is interconnected with the jointing point on the substrate through a metal conductor, as shown in FIG.2. The flip-chip soldering has many excellent packaging characteristics such as short interconnection, small areas, steric channels and high mounting density, so it can enable miniaturized packaging and has been widely used in the semiconductor industry.

In the technical field of pressure sensors, due to the limitations of packaging technology, flip chip-based pressure chips have not been widely used. Their packaging way involves flip-chip soldering the chip on a PCB or ceramic substrate, and then sealing the PCB or ceramic substrate by means of adhesive bonding or O-ring seal.

The flip-chip soldering being applied in a PCB has the following main defects. The PCB is very different from the chip in expansion coefficient, so the risk of solder joints cracking failure caused by stress on the soldering joints in the application environment where the temperature changes greatly, the effect of stress on the MEMS chip will also cause accuracy deviation, and the PCB's resistance to a medium is so limited that it cannot be used in liquids or corrosive gases. The adhesive bonding between the PCB and the housing is also prone to risk the adhesive in falling off due to the pressure on the back.

If the flip-chip soldering is applied in the ceramic substrate, the signal of the pressure chip can only be drawn from the back side by means of a double sided board or by other complex methods, meanwhile the circuit on the ceramic substrate backside with sensor element must be covered and protected, so the substrate and a housing can only be sealed in way of adhesive bonding or an O-ring seal. The adhesive still has such a defect as the medium having a small adaptation range. The O-ring seal cannot enable small size sealing, which cannot be achieved in the application environment with small volume requirements. The O-ring seal is also risked in leakage in the application environment such as refrigerants.

### SUMMARY OF THE INVENTION

In view of the aforementioned technical problems, the present invention provides a pressure sensor core with a simple process. The sensor core can lead a pressure-sensitive signal from a pressure-sensitive element to the signal-processing unit within a very small space, permitting use in a variety of media including refrigerants. The pressure core is small in size, enabling different packaging forms according to different uses, and has a simple process, being apt to achieve large-scale production.

In order to achieve the aforementioned technical purpose, the present invention adopts the following technical solution.

A flip chip-based pressure sensor core includes:
a rigid housing having a through hole therein;
a terminal having one end flip-chip soldered to a MEMS pressure-sensitive chip by means of a solder and another end passing through the through hole in the rigid housing so as to connect to a circuit board of a sensor to achieve signal processing;
an isolation medium filled in the through hole of the rigid housing to sealingly fasten and connect a portion of the terminal in the through hole to an inner wall of the through hole;
and an epoxy filler filled between and around the MEMS pressure-sensitive chip, the terminal, and the solidified isolation medium so as to protect the solder joints .

During operation, a pressure of a medium under test acts on the MEMS pressure-sensitive chip, and signal changes caused by the pressure are output by means of the terminal.

The material of the rigid housing is Kovar or stainless steel.

The isolation medium is glass.

The epoxy filler is a high Tg epoxy resin.

A method for manufacturing the flip chip-based pressure sensor core includes the following steps:
(S1) fixing the terminal in the through hole of the rigid housing through the isolation medium, and passing the other end of the terminal out of the through hole of the rigid housing;
(S2) soldering the MEMS pressure-sensitive chip to one end of the terminal by means of a solder to enable the electrical connection between the MEMS pressure sensitive chip and the terminal, and connecting the other end of the terminal to the circuit board of the sensor to achieve signal processing;
and (S3) filling a high Tg epoxy resin filler between and around the MEMS pressure-sensitive chip, the terminal, and the solidified isolation medium so as to shield soldered joints.

In S1, the isolation medium is made of high-temperature glass with a low thermal expansion coefficient; the rigid housing is made of Kovar or stainless steel with a low thermal expansion coefficient; after the isolation medium is sintered with the terminal, the terminal head is flattened or worn down to ensure the planarity of the four terminals.

In S2, the MEMS pressure-sensitive chip is precisely stuck on the four terminals by means of an imaging system with positioning accuracy of +/- 0.05 mm.

In S3, the core is heated to 60 °C by means of the heating system of dispensers, and the epoxy filler is dispensed following the lineation from the side of the chip. As the viscosity of epoxy is very low under a heating state, the epoxy filler is absorbed into the bottom of the chip under the function of a capillary phenomenon, and solidified at a high temperature after dispensed.

A packaging mode for the flip chip-based pressure sensor core includes the following 4 Modes.

Mode 1: Laser-welding sealing suitable for a weldable metal sensor housing, that is, bonding the metal sensor housing with the rigid housing of the core by laser welding to achieve complete sealing.

Mode 2: O-ring sealing, that is, arranging an O-ring seal between the outer wall of the rigid housing of the core and the inner wall of the sensor housing; in the use environment with high pressure, connectors or other components assisting in applying some pressure on the upper part of the core to prevent the core from parting.

Mode 3: Another O-ring sealing, that is, arranging an O-ring seal at the bottom of the rigid housing of the core, fixing the pressure core at the upper part by riveting the rigid housing with connectors or other components, so as to form sealing by means of O-ring seal's contraction.

Mode 4: Adhesive sealing, that is, sealingly connecting the outer wall side or bottom surface of the rigid housing of the core with the inner wall of the sensor housing by adhesives.

A pressure sensor has the flip chip-based pressure sensor core.

Compared with existing pressure sensor cores, the flip chip-based pressure sensor core according to the present invention has the following advantages:
1. The flip chip-based pressure sensor core according to the present invention has a simple core structure, few components, and capability of standardized and automated mass production.
2. Within a small volume, the pressure signal can be connected to the processing circuit through the terminal, so the core structure is small, helping to enable different forms of packaging.
3. The core terminals are packaged by the isolation medium to maintain the position between the terminals, greatly reducing the influence of stress on the MEMS pressure chip, and enabling reliable reliability and accuracy.
4. The core has good adaptability to a variety of media, and the capability to be used in a variety of media such as refrigerants and enable a full sealing design, solving the media compatibility problem to MEMS pressure chips.

### BRIEF DESCRIPTION OF THE DRAWINGS

FIG.1 is a structure diagram of the flip chip-based pressure sensor core according to the present invention.
   Where, 1-MEMS pressure-sensitive chip; 2-solder; 3-epoxy filler; 4-rigid housing; 5-isolation medium; 6-terminal.
FIG.2 is a structure diagram of Mode 1 for the flip chip-based pressure sensor core according to the present invention.
   Where, 4-core; 5-sensor housing; 6-laser solder fillet.
FIG.3 is a structure diagram of Mode 2 for the flip chip-based pressure sensor core according to the present invention.
   Where, 7- O-ring seal.
FIG.4 is a structure diagram of Mode 3 for the flip chip-based pressure sensor core according to the present invention.
   Where, 8-connector.
FIG.5 is a structure diagram of Mode 4 for the flip chip-based pressure sensor core according to the present invention.
   Where, 9-adhesive.

### DETAILED DESCRIPTION OF SOME EMBODIMENTS

We will further describe the technical solutions of the present invention in detail as follows in combination with the drawings and specific embodiments in the description.

As shown in FIG.1, the present invention adopts the following technical solution:
A flip chip-based pressure sensor core includes:
a rigid housing 4 having a through hole therein;
a terminal 6 having one end flip-chip soldered to a MEMS pressure-sensitive chip 1 by means of a solder 2 and another end passing through the through hole in the rigid housing 4 so as to connect to a circuit board of a sensor to achieve signal processing;
an isolation medium 5 filled in the through hole of the rigid housing 4 and used to sealingly fasten and connect a portion of the terminal 6 in the through hole to an inner wall of the through hole;
and an epoxy filler 3 filled between and around the MEMS pressure-sensitive chip, the terminal, and the solidified isolation medium so as to protect the solder joints .

During operation, a pressure of a medium under test acts on the MEMS pressure-sensitive chip, and signal changes caused by the pressure are output by means of the terminal.

As a preferred embodiment of the present invention, the material of the rigid housing is Kovar or stainless steel. The Kovar or stainless steel has a lower expansion coefficient.

As a preferred embodiment of the present invention, the isolation medium is glass. The glass has a small thermal expansion coefficient, the capability to tolerate the use environment with rapid temperature changes such as refrigerants, and good medium compatibility with oils and various gases.

As a preferred embodiment of the present invention, the epoxy filler is a high Tg epoxy resin. The high Tg epoxy resins are filled between and around the MEMS pressure-sensitive chip 1 and the glass so as to the soldered joints. The high Tg epoxy resins have little stress on the soldered joints and the chips, and can enable the soldered joints not to crack and the chips not to produce an accuracy deviation due to stress in a relatively large temperature range. The filler can tolerate various media such as refrigerant oil.

The method for manufacturing the flip chip-based pressure sensor core as the technical solution of the present invention includes the following technical points:
(1)the applicability of the core to refrigerants and other media;
(2)the planarity of the terminal head within a controllable range and the reliable effect of flip-chip soldering;
(3)the minimized influence of stress on the chip under temperature changes;
(4)the necessary precise position for the chip with the terminal when sticking; and
(5)the protection of soldering joints from the medium.

The method includes the following steps:
S1.Fixing the terminal in the through hole of the rigid housing through the isolation medium, and passing the other end of the terminal out of the through hole of the rigid housing. The terminal is made of high temperature glass (sealing glass used for the terminals of other air-conditioning compressor, such as FS139, Elan48) and can be sealingly connected to rigid bodies such as Kovar alloy or stainless steel, which have a low thermal expansion coefficient, and which will not produce stress cracking under extreme temperature changes. The glass has excellent gas tightness, low thermal expansion and high heat resistance. The gas sealing capability can reach less than 10⁻⁹pa.cm³/sec leakage rate, and the working temperature can reach 180 °C, so the glass can be used in the measurement environment with high sealing requirements and large temperature change range (-40°C~150°C) such as compressor refrigerants. In addition, the glass has good compatibility with most media.
S2. Soldering the MEMS pressure-sensitive chip to one end of the terminal by means of a solder to enable the electrical connection between the MEMS pressure sensitive chip and the terminal, and connecting the other end of the terminal to the circuit board of the sensor to achieve signal processing. The terminal is sealingly connected in the through hole of the rigid housing through the glass, and the other end of the terminal passes out of the through hole of the rigid housing; after the glass is sintered with the terminal, the terminal head is flattened or worn down to ensure the planarity of the four terminals.

The linear expansion coefficient of glass is so low as 4.6ppm similar to that of silicon (3ppm) to enable the relative positions of the four terminals with the chip's soldering joints to remain unchanged in the use environment with frequent temperature changes, and the output accuracy of the chip will not be affected by tensile stress, nor produce a large deviation. The chip is precisely stuck on the four terminals by positioning the terminals through an imaging system with positioning accuracy of +/- 0.05 mm.

S3.Filling a high Tg epoxy resin filler between and around the MEMS pressure-sensitive chip, the terminal, and the solidified isolation medium so as to shield soldered joints. The core is heated to 60 °C by means of the heating system of dispensers, and the epoxy filler is dispensed following the lineation from the side of the chip. As the viscosity of epoxy is very low under a heating state, the epoxy filler is absorbed into the bottom of the chip under the function of a capillary phenomenon, and solidified at a high temperature after dispensed. The epoxy resin protects the soldering joints from erosion of liquids or gases, and the high Tg epoxy resin reduces the stress mismatch between the chip and the filler, does not result in large tensile stress on the chip, nor accuracy deviation.

A packaging mode for the flip chip-based pressure sensor core includes the following 4 Modes.

Mode 1: Laser-welding sealing suitable for a weldable metal sensor housing, as shown in FIG.2, that is, bonding the metal sensor housing with the rigid housing of the core by laser welding to achieve complete packaging. This Mode can be adopted in the use environment with strict requirements on leakage, such as refrigerants.

Mode 2: O-ring sealing, as shown in FIG.3, that is, arranging an O-ring seal between the outer wall of the rigid housing of the core and the inner wall of the sensor housing; in the use environment with high pressure, connectors or other components assisting in applying some pressure on the upper part of the core to prevent the core from parting.

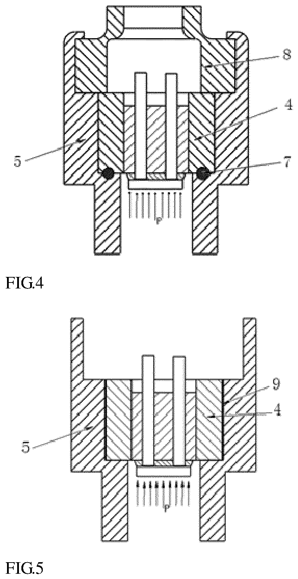

Mode 3: Another O-ring sealing, as shown in FIG.4, that is, arranging an O-ring seal at the bottom of the rigid housing of the core, fixing the pressure core at the upper part by riveting the rigid housing with connectors or other components, so as to form sealing by means of O-ring seal's contraction. This Mode requires a small packaging volume and a simple packaging process.

Mode 4: Adhesive sealing, as shown in FIG.5, that is, sealingly connecting the outer wall side or bottom surface of the rigid housing of the core with the inner wall of the sensor housing by adhesives. This Mode requires a simple packaging process easy to be controlled, instead of expensive equipment investment, and is suitable for the use environment with some gases.

A pressure sensor has the flip chip-based pressure sensor core.

## Claims

1. A flip chip-based pressure sensor core comprising:
a rigid housing having a through hole therein;
a terminal having one end flip-chip soldered to a MEMS pressure-sensitive chip by means of a solder and another end passing through said through hole in said rigid housing so as to connect to a circuit board of said sensor to achieve signal processing;
an isolation medium filled in the through hole of said rigid housing and used to sealingly fasten and connect a portion of said terminal in said through hole to an inner wall of said through hole; and
an epoxy filler filled between and around said MEMS pressure-sensitive chip, said terminal, and said solidified isolation medium so as to protect of said solder joints,
wherein during operation, a pressure of a medium under test acts on said MEMS pressure-sensitive chip, and signal changes caused by the pressure are output by means of said terminal.

2. The flip chip-based pressure sensor core according to claim 1, wherein the material of said rigid housing is Kovar or stainless steel.

3. The flip chip-based pressure sensor core according to claim 1, wherein said isolation medium is glass.

4. The flip chip-based pressure sensor core according to claim 1, wherein said epoxy filler is a high Tg epoxy resin.

5. A method for manufacturing said flip chip-based pressure sensor core according to any one of claims 1-4, comprising the following steps:
(S1) fixing said terminal in said through hole of said rigid housing through said isolation medium, and passing the other end of said terminal out of said through hole of said rigid housing;
(S2) soldering said MEMS pressure-sensitive chip to one end of said terminal by means of a solder to enable the electrical connection between said MEMS pressure sensitive chip and said terminal, and connecting the other end of said terminal to the circuit board of said sensor to achieve signal processing; and
(S3) filling a high Tg epoxy resin filler between and around said MEMS pressure-sensitive chip, said terminal, and said solidified isolation medium so as to shield soldered joints.

6. The method for manufacturing said flip chip-based pressure sensor core according to claim 5, wherein in S1, said isolation medium is made of high-temperature glass with a low thermal expansion coefficient; said rigid housing is made of Kovar or stainless steel with a low thermal expansion coefficient; after said isolation medium is sintered with the terminal, the terminal head is flattened or worn down to ensure the planarity of the four terminals.

7. The method for manufacturing said flip chip-based pressure sensor core according to claim 5, wherein in S2, said MEMS pressure-sensitive chip is precisely stuck on the four terminals by means of an imaging system with positioning accuracy of +/- 0.05 mm.

8. The method for manufacturing said flip chip-based pressure sensor core according to claim 5, wherein in S3, said core is heated to 60 °C by means of the heating system of dispensers, and said epoxy filler is dispensed following the lineation from the side of said chip, as the viscosity of epoxy is very low under a heating state, said epoxy filler is absorbed into the bottom of said chip under the function of a capillary phenomenon, and solidified at a high temperature after dispensed.

9. A packaging mode for said flip chip-based pressure sensor core according to any one of claims 1-4, comprising the following 4 modes:
(Ml) laser-welding sealing suitable for a weldable metal sensor housing, that is, bonding said metal sensor housing with said rigid housing of said core by laser welding to achieve complete packaging;
(M2) O-ring sealing, that is, arranging an O-ring seal between the outer wall of said rigid housing of said core and the inner wall of a sensor housing; in the use environment with high pressure, connectors or other components assisting in applying some pressure on the upper part of said core to prevent said core from parting;
(M3) another O-ring sealing, that is, arranging an O-ring seal at the bottom of said rigid housing of the core, fixing said pressure core at the upper part by riveting said rigid housing with connectors or other components, so as to form sealing by means of O-ring seal's contraction; and
(M4) adhesive sealing, that is, sealingly connecting the outer wall side or bottom surface of said rigid housing of said core with the inner wall of a sensor housing by adhesives.

10. A pressure sensor having said flip chip-based pressure sensor core according to any one of claims 1-4.
